(19) **Europäisches Patentamt / European Patent Office / Office européen des brevets**

(11) **EP 2 400 115 B1**

(12) **EUROPÄISCHE PATENTSCHRIFT**

(45) Veröffentlichungstag und Bekanntmachung des Hinweises auf die Patenterteilung:
**29.05.2019   Patentblatt 2019/22**

(51) Int Cl.:
***F01D 5/18*** *(2006.01)*

(21) Anmeldenummer: **11169589.6**

(22) Anmeldetag: **10.06.2011**

(54) **Wärmebelastetes, Gekühltes Bauteil**

Thermally Loaded, Cooled Component

Composant chargé de chaleur refroidi

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.06.2010   CH 10402010**

(43) Veröffentlichungstag der Anmeldung:
**28.12.2011   Patentblatt 2011/52**

(73) Patentinhaber: **Ansaldo Energia Switzerland AG**
**5401 Baden (CH)**

(72) Erfinder:
• **Szwedowicz, Jarloslaw Leszek**
**5330 Zurzach (CH)**

• **Irmisch, Stefan**
**5452 Oberrohrdorf (CH)**

(74) Vertreter: **Bernotti, Andrea et al**
**Studio Torta S.p.A.**
**Via Viotti, 9**
**10121 Torino (IT)**

(56) Entgegenhaltungen:
| | |
|---|---|
| EP-A1- 0 577 862 | EP-A1- 0 678 715 |
| EP-A1- 0 971 172 | EP-A1- 1 669 670 |
| EP-A1- 2 116 770 | RU-C1- 2 028 456 |
| US-A- 3 359 737 | US-A1- 2010 068 066 |

**Beschreibung**

TECHNISCHES GEBIET

Die vorliegende Erfindung bezieht sich auf das Gebiet der Kühlung von wärmebelasteten Bauteilen. Sie betrifft ein wärmebelastetes, gekühltes Bauteil, wie es in Form einer Turbinenschaufel z.B. aus der RU2028456 C1 bekannt ist.

STAND DER TECHNIK

Eine effektive Kühlung von Gasturbinen-Bauteilen, die mit dem Heissgas der Turbine in Berührung kommen, wie Laufschaufeln, Leitschaufeln oder Brennkammerteilen, ist ein wichtiger Bestandteil für die Kontrolle der Lebensdauer und die Leistungsfähigkeit der Maschine. So wird beispielsweise Luft, die am Verdichter abgezweigt und zu den heissesten Stellen der Gasturbine geführt wird, durch den Rotor und das Gehäuse geleitet. So werden auch heisse Bereiche des Rotors und des Gehäuses gekühlt, was speziell bei den neuesten Generationen von Hochleistungs-Gasturbinen für diese Komponenten zur Erreichung der gewünschten Lebensdauer absolut notwendig ist. In diesem Sinne erfüllt die abgezweigte Luft zwei Aufgaben: Sie reduziert die Metalltemperaturen im Rotor und Gehäuse auf ein akzeptables Niveau und kühlt dann dem Heissgas ausgesetzte Komponenten wie Turbinenschaufeln und Brennkammerteile. Dasselbe gilt auch für andere Kühlmedien wie zum Beispiel Dampf, der speziell für Kühlungszwecke erzeugt werden muss oder aus einem bereits vorhandenen Dampfkreislauf eines Kombikraftwerkes oder einem separaten Dampfkessel abgezweigt wird. Das abgezweigte Kühlmedium ist entweder - in einem offenen Kühlsystem - verloren oder wird - in einem geschlossenen Kühlkreislauf - in den Dampfkreislauf zurückgeführt, wobei jedoch typischerweise einige Energieverluste entstehen.

Beim Entwurf von Kühlsystemen ist es das Ziel

- die Menge des Kühlmediums, die vom Verdichter, vom Dampferzeuger oder einer anderen Quelle für das Kühlmedium kommt, zu reduzieren; und
- die Kühleffektivität des Kühlmediums zu erhöhen, welches beispielsweise durch interne Kühlkanäle strömt.

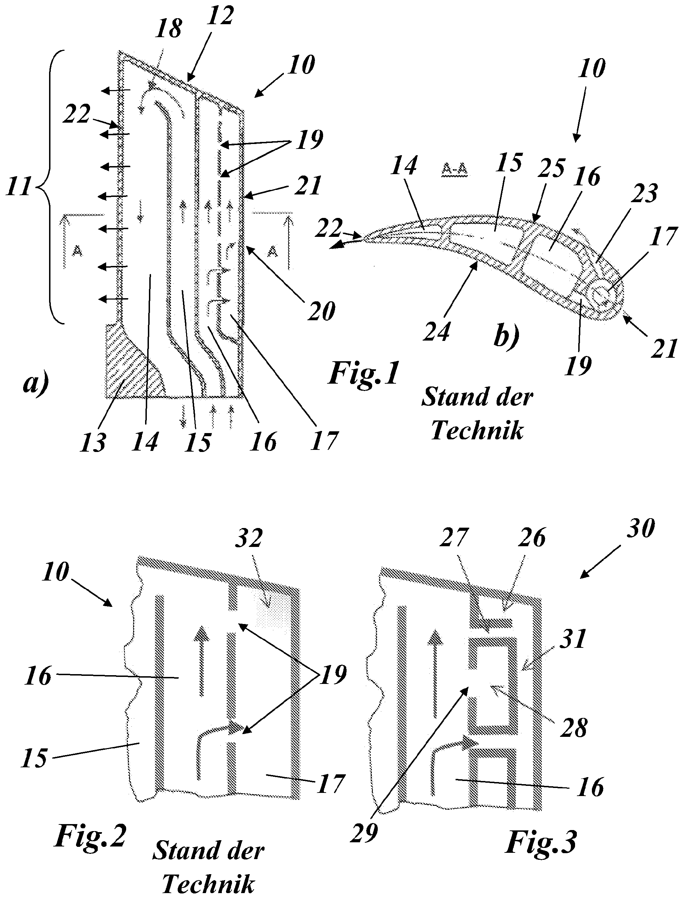

Als bekanntes Beispiel für eine solche Kühlung ist in Fig. 1 eine Turbinenschaufel 10 dargestellt. Teilfigur 1 a) zeigt den Längsschnitt durch die Turbinenschaufel 10, Teilfigur 1 b) zeigt den Querschnitt in der Ebene A-A aus Fig. 1 a). Die Turbinenschaufel 10 hat ein Schaufelunterteil 13 und ein in radialer Richtung daran anschliessendes Schaufelblatt 11, das in einer Schaufelspitze 12 endet. Das Schaufelblatt 11 hat in üblicher Weise eine Vorderkante 21, eine Hinterkante 22, sowie zwischen beiden Kanten eine Druckseite 24 und eine Saugseite 25. Im Inneren des Schaufelblattes 11 verlaufen in radialer Richtung mehrere Kühlkanäle 14, 15, 16 und 17. In den Kühlkanal 15 und 16 tritt vom Schaufelunterteil 13 her ein Kühlmedium ein (Pfeil), strömt zur Schaufelspitze 12, wird dort im Rahmen einer Strömungsumkehr 18 um 180° umgelenkt und strömt im Kühlkanal 14 zurück zum Schaufelunterteil 13 und durch kleine Kühlkanäle der Hinterkante 22. Das in den Kühlkanal 16 eintretende Kühlmedium gelangt durch Durchgangsöffnungen 19 in den benachbarten Kühlkanal 17 und tritt von dort durch Austrittsöffnungen 20, 23 nach aussen, um die Schaufel zum Beispiel nach Art einer Filmkühlung auf der Aussenseite zu kühlen.

Beim Entwurf des wärmebelasteten Bauteils (in diesem Fall: der Turbinenschaufel) wird die Kühlleistung üblicherweise dadurch verstärkt, dass in den Kühlkanälen verschiedene Arten von Hindernissen vorgesehen werden, oder dass Öffnungen oder Schlitze unterschiedlicher Gestalt zwischen benachbarten Kühlkanälen oder gegenüber von zu kühlenden Wänden angeordnet werden. Diese geometrischen Elemente sollen entweder lokale Turbulenzen im Strom des Kühlmediums erzeugen oder die Konvektion in einem lokalen Bereich erhöhen, um den Wärmeübergang zwischen einer heissen Innenwand des Bauteils und dem kälteren Medium zu erhöhen. Selbst wenn ein hochkomplexes Kühlsystem innerhalb des zu kühlenden Bauteils vorgesehen wird, was bei der Herstellung mit hohen Kosten verbunden sein kann, verbleiben dennoch gewisse Bereiche wie zum Beispiel Ecken innerhalb des Bauteils, die im Hinblick auf eine effektive Kühlung nach wie vor eine Herausforderung darstellen, und die aufgrund lokaler Effekte wie Oxidation, Kriechen oder frühzeitige Rissbildung ein Lebensdauerproblem darstellen können.

Das Kühlsystem umfasst im Allgemeinen einen oder mehrere Einlässe für den Eintritt des Kühlmediums in das heisse Bauteil und einen oder mehrere Auslässe für den Austritt des Kühlmediums. Abhängig von dem Prozess der Wärmeübertragung zwischen dem Kühlmedium und den heissen Wänden des Bauteils umfasst das Kühlsystem verschiedene Hohlräume, die durch Kanäle oder Schlitze untereinander verbunden sind. Aufgrund der unterschiedlichen Gestalt, Abmessungen, Temperaturen und Drücke in diesen Hohlräumen und Kanälen treten unterschiedliche akustische Resonanzen im Kühlsystem auf. Im Allgemeinen hat jeder Hohlraum und jeder Kanal eine unterschiedliche akustische Resonanz. Beim Entwurf des Kühlsystems wird darauf geachtet, die Machzahlen in der Strömung des Kühlmediums durch das Kühlsystem innerhalb bestimmter Ober- und Untergrenzen zu halten, um eine Strömungstrennung und damit verbundene Bereiche geringer Wärmeübertragung zu vermeiden.

Eine Alternative zur Erhöhung der Kühlleistung des Kühlmediums in einer Turbinenschaufel unter Verzicht auf turbulenzerhöhende geometrische Elemente innerhalb des Strömungswegs des Kühlmediums offenbart die bereits erwähnte RU 2028456 C1. Aus einem Kühlkanal im Inneren des Schaufelblatts strömt das Kühlmedium, dort Luft, durch eine Düse in zwei nebeneinander liegende, durch eine partiell ausgebildete Trennwand voneinander getrennte Hohlräume. Die Parameter des Kühlluftströmung, der Trennwand und der Hohlräume sind derart aufeinander abgestimmt, dass das Kühlsystem in Schwingung gerät. Auf diese Weise wird ein pulsierender Kühlluftstrom erzeugt, der ausgehend von der Anströmkante entlang der Saug- und Druckseite des Schaufelblatts bis zu dessen Hinterkante strömt, wo die verbrauchte Kühlluft in den Heissgaskanal entlassen wird.

Eine gattungsgleiche Anordnung offenbart das Dokument US 2010/068066 A1. Im Unterschied zu der vorgenannten Einrichtung ist hier im Schaufelfuss ein spezielles schwingungserzeugendes Element angeodnet ist, welches der Kühlluftströmung vor Eintritt in das Schaufelblatt Schwingungen im Bereich zwischen einem und 100 Hz zur Erhöhung der konvektiven Kühlwirkung aufzwingt.

Die Patentschrift US 3359737 bezieht sich auf die Dämpfung thermoakustischer Schwingungen in der Brennkammer eines Raketenantriebs. Eine die Brennkammer umschließende gelochte Rohrwand, deren Rohre von einem Kühlmedium durchströmt werden, ist unter Freilassung eines Ringraums von einer äußeren Hülle umschlossen. Der Ringraum in Verbindung mit den Löchern wirkt als Helmholtzresonator zur Dämpfung von Brennkammerschwingungen. Zum Zwecke der Kühlung ist der Resonatorraum mit einer Kühlmittelquelle verbunden. In Betriebsphasen mit sehr hoher Hitzeentwicklung wird der Resonatorraum mit Kühlmedium beaufschlagt. In diesem Falle fungieren die Löcher in der Rohrwand als Filmkühlungslöcher.

DARSTELLUNG DER ERFINDUNG

Es ist daher eine Aufgabe der Erfindung, ein wärmebelastetes, gekühltes Bauteil zu schaffen, welches die geschilderten Nachteile bekannter Bauteile vermeidet und sich durch eine mit geringerem Aufwand verbundene, verstärkte Kühlung in kritischen Bereichen, insbesondere Ecken des Bauteils, auszeichnet.

Die Aufgabe wird durch die Gesamtheit der Merkmale des Anspruchs 1 gelöst. Wesentlich für die Erfindung ist, dass zur Verbesserung des thermischen Kontaktes zwischen dem Kühlmedium und dem Bauteil wenigstens ein Helmholtzresonator eingesetzt wird, welcher in das Bauteil integriert ist und in Bereichen mit besonders hoher Wärmebelastung angeordnet ist und dergestalt in das Kühlsystem integriert ist, dass er über eine Verengung mit einem benachbarten, im Betrieb vorbeiströmenden Strom des Kühlmediums verbunden ist, um so durch Anregung von akustischen Schwingungen die Kühlwirkung lokal zu verbessern.

Eine Ausgestaltung der Erfindung ist dadurch gekennzeichnet, dass der wenigstens eine Helmholtzresonator mit dem Kühlsystem in hydraulischer Verbindung steht und durch das strömende Kühlmedium selbst zu Schwingungen angeregt wird.

Eine andere Ausgestaltung der Erfindung ist dadurch gekennzeichnet, dass mehrere Helmholtzresonatoren nebeneinander angeordnet sind, und dass die Helmholtzresonatoren untereinander jeweils zur Bildung einer akustischen Wärmepumpe durch einen Verbindungskanal hydraulisch verbunden sind.

Eine andere Ausgestaltung der Erfindung ist dadurch gekennzeichnet, dass das Bauteil Teil einer wärmeerzeugenden elektrischen Einrichtung, insbesondere eines Generators, eines Motors oder einer leistungselektronischen Anlage, ist.

Eine andere Ausgestaltung der Erfindung ist dadurch gekennzeichnet, dass das Bauteil Teil einer Wärmekraftmaschine, insbesondere einer Dampf- oder Gasturbine, ist.

Eine andere Ausgestaltung der Erfindung ist dadurch gekennzeichnet, dass das Bauteil eine Turbinenschaufel ist, dass die Turbinenschaufel ein gekühltes Schaufelblatt aufweist, durch dessen Inneres ein gasförmiges Kühlmedium strömt, und dass im Inneren des Schaufelblattes ein oder mehrere

Helmholtzresonator(en) ausgebildet sind, die von dem strömenden Kühlmedium beaufschlagt werden.

Eine andere Ausgestaltung der Erfindung ist dadurch gekennzeichnet, dass die Turbinenschaufel im Schaufelblatt mehrere in radialer Richtung parallel verlaufende Kühlkanäle aufweist, und dass der oder die Helmholtzresonator(en) in die Kühlkanäle integriert ist (sind).

Eine andere Ausgestaltung der Erfindung ist dadurch gekennzeichnet, dass das Schaufelblatt eine Vorderkante und eine Hinterkante aufweist, und dass der oder die Helmholtzresonator(en) im Bereich der Vorderkante angeordnet ist (sind).

KURZE ERLÄUTERUNG DER FIGUREN

Die Erfindung soll nachfolgend anhand von Ausführungsbeispielen im Zusammenhang mit der Zeichnung näher erläutert werden. Es zeigen

Fig. 1 in zwei Teilfiguren 1 a) und 1 b) den Längsschnitt und den Querschnitt durch eine Turbinenschaufel mit innerer Kühlung, wie sie aus dem Stand der Technik bekannt ist;

Fig. 2 einem vergrösserten Ausschnitt der Turbinenschaufel aus Fig. 1a), der einen für die Kühlung kritischen Eckbereich zeigt; und

Fig. 3 den zu Fig. 2 vergleichbaren Bereich einer Turbinenschaufel, in dem durch eine entsprechende Modifizierung der Kühlkanäle untereinander verbundene Helmholtzresonatoren gemäss einem Ausführungsbeispiel der Erfindung angeordnet sind.

## WEGE ZUR AUSFÜHRUNG DER ERFINDUNG

Ein wesentlicher Punkt der vorliegenden Erfindung ist, die Kühlwirkung lokal dadurch zu verbessern, dass im Kühlsystem in dem entsprechenden Bereich im Kühlmedium akustische Schwingungen angeregt werden. Im Rahmen des nachfolgend erläuterten Ausführungsbeispiels wird ein thermo-akustisches Modell betrachtet, bei dem von einem Netzwerk aus gekoppelten, diskreten, nichtlinearen, schwingenden Hohlräumen innerhalb des Kühlsystems ausgegangen wird. Die Schwingungen werden durch das strömende Kühlmedium selbst angeregt. Je nach Bedarf können Form und Abmessung eines bestimmten Hohlraums an die notwendigen Abmessungen eines bestimmten Helmholtzresonators angepasst werden, wie dies aus einem Vergleich von Fig. 2 (Stand der Technik) und Fig. 3 (Ausführungsbeispiel gemäss Erfindung) deutlich wird.

In Fig. 3 ist der Bereich der Schaufelspitze einer Turbinenschaufel 30 wiedergegeben, bei dem im Vergleich zu Fig. 2 in der besonders wärmebelasteten Ecke 32 der Kühlkanal 17 so umgestaltet ist, dass wenigstens zwei Helmholtzresonatoren (Hohlräume) 26 und 28 gebildet werden, die durch einen Verbindungskanal 31 untereinander hydraulisch verbunden sind. Der Helmholtzresonator 26 ist durch eine Verengung 27 mit dem benachbarten Strom des Kühlmediums verbunden, der Helmholtzresonator 28 entsprechend durch einen Schlitz 29. Die Gestalt und die Abmessungen des Schlitzes 29 müssen im Hinblick auf die Strömungsgeschwindigkeit des daran vorbeiströmenden Kühlmediums (Pfeile) bestimmt werden.

Durch die Auswahl geeigneter Dimensionen der Hohlräume sowie der Verengungen der Helmholtzresonatoren 26 und 28 im Hinblick auf die Strömungsparameter des Kühlmediums können zwischen benachbarten Resonatoren unterschiedliche Intensitäten von akustischen Schwingungen angeregt werden. Daraus resultiert das Phänomen des akustischen Wärmepumpens, bei dem Wärme vom Resonator mit der niedrigeren Schwingungsamplitude zum Resonator mit der höheren Schwingungsamplitude gepumpt wird.

Der Wärmetransport zwischen benachbarten Hohlräumen, die durch einen Verbindungskanal (31 in Fig. 3) untereinander verbunden sind, kann durch folgende Gleichung abgeschätzt werden:

$$\dot{Q} = \left(\frac{S\delta}{4}\right)\frac{1+\sqrt{\sigma}}{1+\sigma}v_c p_c \, ,$$

wobei S den Umfang der Oberfläche des Verbindungskanals (31) bezeichnet, $\delta$ die thermische Eindringtiefe darstellt, $\sigma$ die Prandtl-Zahl ist und $p_c$ und $V_c$ die Amplitude der akustischen Schwingung beziehungsweise die Geschwindigkeit im Verbindungskanal (31) sind. Die Geschwindigkeit $V_c$ lässt sich berechnen zu:

$$v_c = \frac{\Delta p}{\omega \rho l_e} \, ,$$

wobei $\Delta p$ die Differenz der Schwingungsamplituden der benachbarten Resonatoren ist, $\rho$ die Dichte des Kühlmediums bezeichnet, $\omega$ die Winkelfrequenz des akustischen Systems darstellt und $I_e$ die effektive Länge des Verbindungskanals (31) ist, die durch Verluste an beiden Enden des Kanals beeinflusst wird.

Bei entsprechender Auslegung und Anordnung der Helmholtzresonatoren kann Wärme aus dem kritischen Bereich "abgepumpt" werden, was einer verstärkten Kühlung in diesem Bereich gleichkommt.

Die vorliegende Erfindung beschränkt sich nicht auf die oben dargestellte analytische Methode. Vielmehr können auch andere Prozeduren und Methoden verwendet werden, um auf akustischem Wege in einem Kühlsystem mit gasförmigem Kühlmedium, insbesondere Luft, eines wärmebelasteten Bauteils eine verbesserte Kühlung zu erreichen. So kann die notwendige akustische Resonanz durch Modifizieren einer bestehenden Geometrie eines Kühlkanals oder eines Forums erzeugt werden.

Die akustischen Resonanzen im Kühlsystem können basieren auf

- den Formen stehender Wellen quer zum Kühlkanal oder entlang dem Kühlkanal für niedrige Machzahlen und klar 0,2 und/oder
- den Formen wandernder Wellen quer zum Kühlkanal oder entlang den Kühlkanal für höhere Machzahlen oberhalb 0,3 und/oder
- den Formen rotierender Wellen entlang den Kühlkanal, sowie
- der Überlagerung dieser Typen zur Verbesserung des Kühleffekts.

Neben der Gestalt und den geometrischen Abmessungen müssen auch die Temperatur und der Druck berücksichtigt werden, um die auf akustischem Wege verbesserte Kühlleistung zu erreichen.

Die hier beschriebene Methode zur akustisch verstärkten Kühlung kann bei Gasturbinen sowohl im vorgesehenen Arbeitsbereich als auch ausserhalb des Arbeitsbereiches eingesetzt werden, aber auch bei jeder anderen Maschine oder Vorrichtung, die eine Kühlung benötigt, wie zum Beispiel ein Generator, ein Düsentriebwerk, jede Art von Kolbenmaschine, elektrische Motoren oder Antriebe. Die akustischen Resonanzen können aber auch für sich genommen als zentraler Bestandteil eines Kühlprozesses eingesetzt werden. Eine solche Ausgestaltung lässt sich auch bei anderen Komponenten einer Gasturbine anwenden, wie zum Beispiel auf Hohlräume des Rotors oder des Gehäuses.

BEZUGSZEICHENLISTE

| 10,30 | Turbinenschaufel |
|---|---|
| 11 | Schaufelblatt |
| 12 | Schaufelspitze |
| 13 | Schaufelunterteil |
| 14,15,16,17 | Kühlkanal |
| 18 | Strömungsumkehr |
| 19 | Durchgangsöffnung |
| 20,23 | Austrittsöffnung |
| 21 | Vorderkante |
| 22 | Hinterkante |
| 24 | Druckseite |
| 25 | Saugseite |
| 26,28 | Helmholtzresonator |
| 27 | Verengung |
| 29 | Schlitz |
| 31 | Verbindungskanal |
| 32 | Ecke (besonders wärmebelastet) |

**Patentansprüche**

1. Gruppe umfassend ein wärmebelastetes, gekühltes Bauteil (30) und ein Kühlsystem (14, 15, 16, 17, 19), wobei das Bauteil (30) zur Kühlung an das Kühlsystem (14, 15, 16, 17, 19) thermisch angekoppelt ist, wobei das Kühlsystem (14, 15, 16, 17, 19) durch ein forciert von aussen eingeführtes gasförmiges Kühlmedium beaufschlagbar ist, um durch thermischen Kontakt mit dem Bauteil (30) Wärme von dem Bauteil (30) aufzunehmen und abzutransportieren, wobei zur Verbesserung des thermischen Kontaktes zwischen dem Kühlmedium und dem Bauteil (30) wenigstens ein Helmholtzresonator (26, 28) eingesetzt ist, welcher in das Bauteil (30) integriert ist, wobei der wenigstens eine Helmholtzresonator (26, 28) im Bauteil (30) in Bereichen mit besonders hoher Wärmebelastung angeordnet ist und dergestalt in das Kühlsystem (14, 15, 16, 17, 19) integriert ist, dass er über eine Verengung (27) mit einem benachbarten, im Betrieb vorbeiströmenden Strom (16) des Kühlmediums verbunden ist, um so durch Anregung von akustischen Schwingungen die Kühlwirkung lokal zu verbessern.

2. Gruppe nach Anspruch 1, **dadurch gekennzeichnet, dass** der wenigstens eine Helmholtzresonator (26, 28) mit dem Kühlsystem (14, 15, 16, 17, 19) in hydraulischer Verbindung steht und durch das strömende Kühlmedium selbst zu Schwingungen anregbar ist.

3. Gruppe nach Anspruch 1 oder 2, **dadurch gekennzeichnet, dass** mehrere Helmholtzresonatoren (26, 28) nebeneinander angeordnet sind, und dass die Helmholtzresonatoren (26, 28) untereinander jeweils zur Bildung einer akustischen Wärmepumpe durch einen Verbindungskanal (31) hydraulisch verbunden sind.

4. Gruppe nach einem der Ansprüche 1-3, **dadurch gekennzeichnet, dass** das Bauteil Teil einer wärmeerzeugenden elektrischen Einrichtung, insbesondere eines Generators, eines Motors oder einer leistungselektronischen Anlage, ist.

5. Gruppe nach einem der Ansprüche 1-3, **dadurch gekennzeichnet, dass** das Bauteil (30) Teil einer Wärmekraftmaschine, insbesondere einer Dampf- oder Gasturbine, ist.

6. Gruppe nach Anspruch 5, **dadurch gekennzeichnet, dass** das Bauteil eine Turbinenschaufel (30) ist, dass die Turbinenschaufel (30) ein gekühltes Schaufelblatt (11) aufweist, dessen Inneres durch ein gasförmiges Kühlmedium beaufschlagbar ist, und dass im Inneren des Schaufelblattes (11) ein oder mehrere Helmholtzresonator(en) (26, 28) ausgebildet sind, die von dem strömenden Kühlmedium beaufschlagbar sind.

7. Gruppe nach Anspruch 6, **dadurch gekennzeichnet, dass** die Turbinenschaufel (30) im Schaufelblatt (11) mehrere in radialer Richtung parallel verlaufende Kühlkanäle (14, 15, 16, 17) aufweist, und dass der oder die Helmholtzresonator(en) (26, 28) in die Kühlkanäle (14, 15, 16, 17) integriert ist bzw. sind.

8. Gruppe nach Anspruch 7, **dadurch gekennzeichnet, dass** das Schaufelblatt (11) eine Vorderkante (21) und eine Hinterkante (22) aufweist, und dass der oder die Helmholtzresonator(en) (26, 28) im Bereich der Vorderkante (21) angeordnet ist bzw. sind.

**Claims**

1. Group comprising a heat-loaded, cooled component (30) and a cooling system (14, 15, 16, 17, 19), wherein the component (30) is thermally coupled to the cooling system (14, 15, 16, 17, 19) for cooling, wherein the cooling system (14, 15, 16, 17, 19) can be loaded with a gaseous cooling medium introduced forcibly from the outside in order, by thermal contact with the component (30), to absorb and transport heat away from the component (30), wherein to improve the thermal contact between the cooling medium and the component (30), at least one Helmholtz resonator (261, 28) is used which is integrated in the component (30), wherein the at least one Helmholtz resonator (26, 28) is arranged in the component (30) in regions with particularly high thermal load and is integrated in the cooling system (14, 15, 16, 17, 19) such that it is connected via a constriction (27) to an adjacent flow (26) of the cooling medium passing by during operation, in order thus to locally improve the cooling effect by excitation of acoustic vibrations.

2. Group according to claim 1, **characterised in that** the at least one Helmholtz resonator (26, 28) is hydraulically connected to the cooling system (14, 15, 16, 17, 19) and can be excited to vibrate by the flowing cooling medium itself.

3. Group according to claim 1 or 2, **characterised in that** several Helmholtz resonators (26, 28) are arranged next to each other and that the Helmholtz resonators (26, 28) are hydraulically connected to each other by a connecting channel (31) so as to form an acoustic heat pump in each case.

4. Group according to any of claims 1 - 3, **characterised in that** the component is part of the heat-generating electrical device, in particular a generator, a motor or a power electronics system.

5. Group according to any of claims 1 - 3, **characterised in that** the component (30) is part of a combined heat and power plant, in particular a steam or gas turbine.

6. Group according to claim 5, **characterised in that** the component is a turbine vane (30), and that the turbine vane (30) has a cooled vane blade (11), the interior of which may be impacted with a gaseous cooling medium, and that one or more Helmholtz resonators (26, 28) are formed in the interior of the vane blade (11) and can be impacted by the flowing cooling medium.

7. Group according to claim 6, **characterised in that** the vane blade (11) of the turbine vane (30) has several cooling channels (14, 15, 16, 17) running parallel in the radial direction, and that the Helmholtz resonator(s) (26, 28) is or are integrated in the cooling channels (14, 15, 16, 17).

8. Group according to claim 7, **characterised in that** the vane blade (11) has a front edge (21) and a rear edge (22), and that the Helmholtz resonator(s) (26, 28) is or are arranged in the region of the front edge (21).

**Revendications**

1. Groupe comprenant un composant sollicité thermiquement et refroidi (30) et un système de refroidissement (14, 15, 16, 17, 19), le composant (30) étant couplé thermiquement au système de refroidissement (14, 15, 16, 17, 19) pour le refroidissement, le système de refroidissement (14, 15, 16, 17, 19) pouvant être alimenté en fluide de refroidissement gazeux introduit de l'extérieur par force, afin d'absorber et d'évacuer, par contact thermique avec le composant (30), la chaleur provenant du composant (30), où, pour améliorer le contact thermique entre le fluide de refroidissement et le composant (30), au moins un résonateur de Helmholtz (26, 28) est utilisé, qui est intégré dans le composant (30), l'au moins un résonateur de Helmholtz (26, 28) étant disposé dans le composant (30) dans des endroits avec une sollicitation thermique particulièrement élevée et étant intégré dans le système de refroidissement (14, 15, 16, 17, 19) de façon à ce qu'il soit relié, par l'intermédiaire d'un rétrécissement (27), avec un flux (16), adjacent et s'écoulant à proximité lors du fonctionnement, du fluide de refroidissement, afin d'améliorer localement l'action du refroidissement par une excitation à l'aide de vibrations acoustiques.

2. Groupe selon la revendication 1, **caractérisé en ce que** l'au moins un résonateur de Helmholtz (26, 28) est en liaison hydraulique avec le système de refroidissement (14, 15, 16, 17, 19) et peut être amené à vibrer lui-même sous l'action de l'écoulement du fluide de refroidissement.

3. Groupe selon la revendication 1 ou 2, **caractérisé en ce que** plusieurs résonateurs de Helmholtz (26, 28) sont juxtaposés et **en ce que** les résonateurs de Helmholtz (26, 28) sont reliés hydrauliquement entre eux à l'aide d'un canal de liaison (31) pour la formation d'une pompe à chaleur acoustique.

4. Groupe selon l'une des revendications 1 à 3, **caractérisé en ce que** le composant fait partie d'un dispositif électrique générant de la chaleur, plus particulièrement d'un générateur, d'un moteur ou d'une installation d'électronique de puissance.

5. Groupe selon l'une des revendications 1 à 3, **caractérisé en ce que** le composant (30) fait partie d'un moteur thermique, plus particulièrement d'une turbine à vapeur ou à gaz.

6. Groupe selon la revendication 5, **caractérisé en ce que** le composant est une aube de turbine (30), **en ce que** l'aube de turbine (30) comprend une pale refroidie (11) dont l'intérieur peut être alimenté en fluide de refroidissement gazeux et **en ce que**, à l'intérieur de la pale (11), sont prévus un ou plusieurs résonateurs de Helmholtz (26, 28), qui peuvent être alimentés par le fluide de refroidissement en circulation.

7. Groupe selon la revendication 6, **caractérisé en ce que** l'aube de turbine (30) comprend, dans la pale (11), plusieurs canaux de refroidissement (14, 15, 16, 17) s'étendant parallèlement dans la direction radiale, et **en ce que** le ou les résonateurs de Helmholtz (26, 28) sont intégrés dans les canaux de refroidissement (14, 15, 16, 17).

8. Groupe selon la revendication 7, **caractérisé en ce que** la pale (11) présente une arête avant (21) et une arête arrière (22) et **en ce que** le ou les résonateurs de Helmholtz (26, 28) sont disposés au niveau de l'arête avant (21).

**Fig.1**

*a)*

13 14 15 16 17

**Fig.1**

*b)*

**Stand der Technik**

**Fig.2** **Stand der Technik**

**Fig.3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- RU 2028456 C1
- US 2010068066 A1
- US 3359737 A